(19) **Europäisches Patentamt / European Patent Office / Office européen des brevets**

(11) **EP 3 121 234 B1**

(12) **EUROPEAN PATENT SPECIFICATION**

(45) Date of publication and mention
of the grant of the patent:
**06.02.2019  Bulletin 2019/06**

(51) Int Cl.:
***C09D 5/00*** *(2006.01)*

(21) Application number: **16173369.6**

(22) Date of filing: **15.02.2013**

(54) **PIGMENT COMPOSITIONS**

PIGMENTZUSAMMENSETZUNGEN

COMPOSITIONS DE PIGMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2012  US 201261599260 P**

(43) Date of publication of application:
**25.01.2017  Bulletin 2017/04**

(62) Document number(s) of the earlier application(s) in
accordance with Art. 76 EPC:
**13705550.5 / 2 814 890**

(73) Proprietor: **Imerys Minerals Limited
Par
Cornwall PL24 2SQ (GB)**

(72) Inventors:
• **PRESTON, Janet
St. Austell Cornwall PL25 3EH (GB)**

• **NUTBEEM, Christopher
Carlestown
St. Austell Cornwall PL25 3NN (GB)**
• **LYONS, Anthony V.
Macon Georgia 31210 (US)**
• **WYGANT, Roger W.
East Dublin, Georgia 31027 (US)**
• **COULTER, Philip
Hillsborough Co. Down (IE)**
• **HALLAM, Benny
Truro Cornwall TR3 6QU (GB)**

(74) Representative: **Rushton, David John
Haseltine Lake LLP
Redcliff Quay
120 Redcliff Street
Bristol BS1 6HU (GB)**

(56) References cited:
**WO-A2-2008/112419  DE-A1-102004 054 048
US-A1- 2004 134 378  US-A1- 2007 100 035
US-A1- 2010 107 509**

## Description

### Field of the Invention

The present invention relates to pigment compositions and aqueous coating compositions comprising said pigment compositions which are suitable for coating paper products. The present invention also relates to a substrate coated with said aqueous coating composition. In particular, the aqueous coating compositions are suitable for coating paper which is for use in inkjet printing. The present invention also describes methods of making the pigment and coating compositions and uses thereof.

### Background of the Invention

Paper coating compositions, which are suitable for use in coating paper products, normally comprise one or more finely ground inorganic particulate pigments (such as hydrous or calcined kaolin, ground or precipitated calcium carbonate or titanium dioxide), one or more binders (such as starch or latex) and optional further additives.

With regard to inkjet printing, the type of paper used with an inkjet printer plays a role in the quality of the image printed. Papers suitable for inkjet printing usually comprise a basepaper coated with a composition that improves the properties of the paper with regard to such properties as ink reception. Typically, coating compositions for use in inkjet applications include a powder which is capable of absorbing ink coated on the paper surface. Preferably, when the ink is sprayed onto the paper it will remain in a well focussed symmetrical dot. The ink should not be absorbed too deeply by the paper or optical density will be lost at the paper surface and the sprayed dot of ink may spread out in an irregular manner to cover a larger area than intended and appear rough at the edges. An acceptable combination of properties is not straight-forward to achieve for high quality inkjet paper.

US 2010/107509 A1 relates to the use of abrasive particles in forming an abrasive article via the use of a slurry comprising continuous and discontinuous phases. WO 2008/112419 A2 relates generally to paint formulations including a combination of cellulose ether and a network building polymer as a thickening system to provide shelf stability. US 2007/100035 A1 relates to latex paints comprising a color change additive. DE 102004054048 relates to an aqueous coating material comprising particles composed of addition polymer and finely divided inorganic solid and at least one pulverulent pigment. US 2004/134378 A1 is directed to a protective barrier coating composition including a metal borate compound, a zinc compound, magnesium hydroxide, and a water based binder.

As such, there is a continued need for alternative and/or improved pigment compositions which are suitable for use in the preparation of coating compositions, particularly for coating compositions which are suitable for coating paper which is intended for use in inkjet printing.

### Summary of the Invention

The present invention is defined in and by the appended claims.

In a first aspect, the present invention provides a pigment composition comprising an inorganic particulate material, a multivalent metal salt and a non ionic dispersant wherein the inorganic particulate material is selected from one or more of: alkaline earth metal carbonate or alkaline earth metal sulphate, dolomite, gypsum, a hydrous kandite clay, an anhydrous (calcined) kandite clay, talc or mica and wherein the non ionic dispersant is a polymer.

There is described a pigment composition comprising an inorganic particulate material and calcium chloride or calcium sulphate.

The pigment composition in accordance with the present invention may be used to make coating compositions. The coating compositions are suitable for coating substrates such as paper products. In particular, the coating compositions are suitable for coating paper which is used for or suitable for use in inkjet printing.

Accordingly, in a second aspect, the present invention provides an aqueous coating composition comprising the pigment composition in accordance with the first aspect of the present invention. In addition to the pigment composition, the coating composition may further comprise water and at least one binder.

In a third aspect, the present invention provides a coated substrate (e.g. a paper product) wherein the substrate has been coated with a coating composition in accordance with the second aspect of the present invention. The paper product may further comprise a precoat.

A method of making the pigment composition in accordance with the first aspect of the invention comprising blending or combining the components of the pigment composition is described.

A method of making the aqueous coating composition in accordance with the second aspect of the invention, comprising blending or combining the pigment composition in accordance with the first aspect of the invention with water and at least one binder is described.

A method of making a coated substrate, e.g. coated paper, comprising applying the coating composition in accordance with the second aspect of the invention to a substrate, e.g. paper is described.

There are numerous advantages associated with the various aspects of the present invention. In certain embodiments, the coating compositions in accordance with the present invention may be applied to a substrate (e.g. paper) at relatively high solids content on a high speed paper machine. For example, the coating composition may be applied using a high speed blade coater at a high solids content (for example >60wt%) at 1000m/min with minimal or no runnability issues (e.g. scratching, splashing etc). The compositions may be used to produce single and, particularly advantageously, double coated papers which possess good inkjet print quality using pigmented inkjet inks which can dry quickly with low amounts of set off providing high colour density and good line quality (low wicking and bleeding). For example, embodiments of the compositions in accordance with the present invention may provide set off densities of about 0.6 or less. The compositions capture and effectively immobilize the ink so that when the freshly printed surface is rubbed the ink is not transferred to the unprinted area (smearing). The compositions are effective in capturing the inkjet ink near to the surface of the coating which contributes to the superior colour density. By also controlling viscosity, certain embodiments of the compositions in accordance with the present invention are particularly suitable for applying the coating compositions (or coating colours) on a modern high speed coating machine. Certain embodiments are also particularly useful in connection with inks which comprise significant amounts of glycerol. High glycerol containing inks are particularly challenging to work with because of their tendency to dry slowly and to smear.

Use of the coating compositions in accordance with the present invention provides good print quality characteristics including one or more of contrast parameter, line width parameter, quality parameter, colour saturation, mottle contrast and print density. For example, the contrast parameter may be greater than about 170, or greater than about 190, or greater than about 210. For example, the line width parameter may be greater than about 0.935, or greater than about 0.940, or greater than about 0.945. For example, the quality parameter may be greater than about 160, or greater than about 180, or greater than about 200. The print density (black) may be greater than about 0.90, for example greater than about 0.95, for example greater than about 1.00, for example greater than about 1.6. The "yellow" values may be greater than about 0.80, for example greater than about 0.85, for example greater than about 0.90. The "cyan" values may be greater than about 1.00, for example greater than about 1.05, for example greater than about 1.10. The "magenta" values may be greater than about 0.85, for example greater than about 0.90, for example greater than about 0.95.

In certain embodiments, the compositions in accordance with the present invention, optionally, do not require the presence of a cationic polymer or a cationic dye which may be present as a fixative. This is advantageous for a number of reasons. For example, the presence of cationic polymer fixative may cause problems when fed back into the recirculation system of a paper mill, particularly if it comes into contact with anionic coating colours or slurries. Known coating compositions for use in connection with inkjet printing typically comprise a cationic fixative in order to hold the ink close to the surface of the printed paper. However, the present inventors have found that to achieve the beneficial results associated with certain embodiments of the present invention it is not necessary for a cationic polymer to be present in the pigment composition or the coating composition.

Any feature in one aspect of the invention may be applied to any other aspect or aspects of the invention, in any appropriate combination. In particular, product, composition or article aspects may be applied to method aspects, and vice versa.

## Detailed Description of the Invention

### The Inorganic Particulate Material

The inorganic particulate material may be an alkaline earth metal carbonate or sulphate, such as calcium carbonate, magnesium carbonate, dolomite, gypsum, a hydrous kandite clay such as kaolin or ball clay, an anhydrous (calcined) kandite clay such as metakaolin or fully calcined kaolin, talc or mica. The inorganic particulate material may comprise a blend of the listed inorganic particulate materials or the inorganic particulate material may consist of, or consist essentially of, just one of the listed inorganic particulate materials. For example, the inorganic particulate material may be 100wt% ground calcium carbonate (GCC) or 100wt% precipitated calcium carbonate (PCC) or may consist essentially of GCC or PCC. Alternatively, the inorganic particulate material may be 100wt% kaolin or may consist essentially of kaolin. Alternatively, the inorganic particulate material may be 100wt% talc or may consist essentially of talc. The inorganic particulate material may comprise at least about 90wt% kaolin or at least 90wt% talc based on the total dry weight of the inorganic particulate material. The blend of inorganic particulate material may consist of, or consist essentially of, or comprise a blend of GCC and PCC. Other suitable blends are GCC and/or PCC blended with kaolin. The amount of kaolin may be up to about 40wt% based on the total dry weight of the inorganic particulate material. An example of a suitable blend comprises about a 70:30 blend by weight of GCC to kaolin. The amount of inorganic particulate material may be present in the coating composition in an amount of about 1wt% to about 99wt% or about 20wt% to about 95wt% or about 45wt% to about 95wt% based on the dry inorganic particulate material.

The inorganic particulate material for use in certain embodiments of the present invention may consist of or may comprise calcium carbonate. Hereafter, the invention may tend to be discussed in terms of calcium carbonate, and in relation to aspects where the calcium carbonate is processed and/or treated. The invention should not be construed as being limited to such embodiments.

The particulate calcium carbonate used in certain embodiments of the present invention may be obtained from a natural source by grinding or may be prepared synthetically by precipitation (PCC), or may be a combination of the two, i.e. a mixture of the naturally derived ground material and the synthetic precipitated material. The PCC may also be ground.

Ground calcium carbonate (GCC) is typically obtained by grinding a mineral source such as chalk, marble or limestone, which may be followed by a particle size classification step, in order to obtain a product having the desired degree of fineness. The particulate solid material may be ground autogenously, i.e. by attrition between the particles of the solid material themselves, or alternatively, in the presence of a particulate grinding medium comprising particles of a different material from the calcium carbonate to be ground.

Wet grinding of calcium carbonate involves the formation of an aqueous suspension of the calcium carbonate which may then be ground, optionally in the presence of a suitable dispersing agent, for example sodium polyacrylate. Reference may be made to, for example, EP-A-614948
for more information regarding the wet grinding of calcium carbonate. The dispersant used for grinding the calcium carbonate may comprise, consist essentially of, or consist of a non ionic dispersant.

After the grinding has been carried out, the suspension may be dewatered to a high solids suspension, and any grinding medium removed. A high solids suspension formed by said dewatering may suitably have a solids level of at least about 10wt% (for example, at least about 50wt%) to about 80wt%, for example up to about 78wt%. The high solids suspension may be formed using a dispersing agent, for example a non ionic dispersant. The dispersing agent used may or may not be the same as that optionally used in the grinding step. However, the dispersing agent used at the post-grinding stage may be added to restrict flocculation of the particulate inorganic material in the high solids suspension, and may typically be present in a dispersant-effective amount, typically at least about 0.1% by weight of the dry inorganic particulate material, or at least about 5% by weight. The amount of dispersing agent which may be present may be at least about 0.3% to about 1.5% by weight of the dry inorganic particulate material. The amounts of dispersing agent specified are particularly suitable for use in connection with GCC and PCC.

When the inorganic particulate material is obtained from naturally occurring sources, it may be that some mineral impurities contaminate the ground material. For example, naturally occurring calcium carbonate occurs in association with other minerals. Also, in some circumstances, minor additions of other minerals may be included, for example, one or more of kaolin, calcined kaolin, wollastonite, bauxite, talc or mica, could also be present. In general, however, the inorganic particulate material used in certain embodiments of the invention may contain less than 5% by weight, preferably less than 1% by weight of other mineral impurities.

PCC may be used as the source of particulate calcium carbonate in the present invention, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in the practice of certain embodiments of the present invention. In all three processes, limestone is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process, the milk of lime is contacted with soda ash to produce, by double decomposition, a precipitate of calcium carbonate and a solution of sodium hydroxide. The sodium hydroxide is substantially completely separated from the calcium carbonate if this process is to be commercially attractive. In the third main commercial process, the milk of lime is first contacted with ammonium chloride to give a calcium chloride solution and ammonia gas. The calcium chloride solution is then contacted with soda ash to produce, by double decomposition, precipitated calcium carbonate and a solution of sodium chloride.

The PCC may be formed into a cake (e.g. a filter cake), which comprises at least about 70wt% solid content, the remainder being water. A dispersant (for example, a non ionic dispersant or an anionic dispersant) may be combined directly with the cake and, optionally, water may be added to the cake before the dispersant is added.

The process for making PCC results in very pure calcium carbonate crystals and water. The crystals can be produced in a variety of different shapes and sizes, depending on the specific reaction process that is used. The three main forms of PCC crystals are aragonite, rhombohedral and scalenohedral, all of which are suitable for use in certain embodiments of the present invention, including mixtures thereof.

The inorganic particulate material may comprise, consist of, or consist essentially of kaolin. The kaolin may be a platy kaolin or a hyper-pfaty kaolin. The amount of platey or hyper-platey kaolin present may be up to about 30wt% based on the total weight of the dry inorganic particulate material. By 'platy' kaolin is meant kaolin having a high shape factor. A platy kaolin has a shape factor from about 20 to less than about 60. A hyper-platy kaolin has a shape factor from about 60 to 100 or greater than 100. "Shape factor", as used herein, is a measure of the ratio of particle diameter to particle thickness for a population of particles of varying size and shape as measured using the electrical conductivity methods, apparatuses, and equations described in U.S. Patent No. 5,576,617. As described in the '617 patent, the electrical conductivity of a composition of an aqueous suspension of orientated particles under test is measured as the composition flows through a vessel. Measurements of the electrical conductivity are taken along one direction of the vessel and along another direction of the vessel transverse to the first direction. Using the difference between the two conductivity measurements, the shape factor of the particulate material under test is determined.

Kaolin clay for use in certain embodiments of the present invention may be a processed material derived from a natural source, namely raw natural kaolin clay mineral. The processed kaolin clay may typically contain at least about 50% by weight kaolinite. For example, most commercially processed kaolin clays contain greater than about 75% by weight kaolinite and may contain greater than about 90% by weight, in some cases greater than about 95% by weight of kaolinite.

Kaolin clay used in certain embodiments of the present invention may be prepared from the raw natural kaolin clay mineral by one or more other processes which are well known to those skilled in the art, for example by known refining or beneficiation steps. For example, the clay mineral may be bleached with a reductive bleaching agent, such as sodium hydrosulfite. If sodium hydrosulfite is used, the bleached clay mineral may optionally be dewatered, and optionally washed and again optionally dewatered, after the sodium hydrosulfite bleaching step. The clay mineral may be treated to remove impurities, e. g. by flocculation, flotation, or magnetic separation techniques well known in the art.

The process for preparing the particulate kaolin clay for use in certain embodiments of the present invention may also include one or more comminution steps, e.g., grinding or milling. Light comminution of a coarse kaolin is used to give suitable delamination thereof. The comminution may be carried out by use of beads or granules of a plastic (e. g. nylon), sand or ceramic grinding or milling aid. The coarse kaolin may be refined to remove impurities and improve physical properties using well known procedures. The kaolin clay may be treated by a known particle size classification procedure, e.g., screening and centrifuging (or both), to obtain particles having a desired $d_{50}$ value or particle size distribution. An example of a kaolin suitable for use in embodiments of the present invention is a platey kaolin (commercially available from Imerys Minerals UK Limited) wherein the mass percent finer than $2\mu m$ is 88-93 as measured by Sedigraph and the brightness is 87.5-89. The kaolin may be used to form blends, for example, with one or more GCCs.

Following the grinding process, the inorganic particulate material may have a $d_{50}$ in the range of about $0.1\mu m$ to about $2\mu m$, for example about $0.3\mu m$ to about $1.5\mu m$, for example about $0.3\mu m$ to about $0.7\mu m$. Preferably, the inorganic particulate material, following grinding has a $d_{50}$ of less than or equal to about $0.6\mu m$.

Unless otherwise stated, the median particle size ($d_{50}$ value) and other particle size properties referred to herein for the inorganic particulate materials are as measured in a well known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The median particle size $d_{50}$ is the value determined in this way of the particle esd at which there are 50% by weight of the particles which have an equivalent spherical diameter less than that $d_{50}$ value.

The particulate inorganic material may have a particle size distribution steepness factor equal to or greater than about 25, for example equal to or greater than about 40 or equal to or greater than about 45 or equal to or greater than about 50. The particulate inorganic material may have a particle size distribution steepness factor of about 25 to about 70, for example about 45 to about 50 or about 50 to about 70. The steepness factor is defined as the ratio of the $d_{30}$ (Sedigraph) equivalent spherical diameter (at which 30% by weight of the particles are finer) to the $d_{70}$ (Sedigraph) equivalent spherical diameter (at which 70% by weight of the particles are finer), multiplied by 100 ($d_{30}/d_{70}$ x 100). For example, when the material is calcium carbonate, the steepness factor may be about 25 to about 70, for example about 25 to about 35, or greater than about 40, for example about 45 to about 50 or about 50 to about 70. GCC may have a steepness factor of about 45 to about 50. PCC may have a steepness factor of about 50 to about 70. The values of steepness factor disclosed herein may be used in connection with pre-coat compositions and/or top coat compositions.

*The Multivalent Metal Salt*

The multivalent metal salt may be a divalent metal salt. The multivalent or divalent metal salt may be water soluble. The divalent metal salt may be an alkaline earth metal salt. For example, the alkaline earth metal salt may be a calcium or magnesium or barium salt. Suitable anions include chloride or any one of the following: sulphate, nitrate and hydroxide. The multivalent metal salt may comprise a mixture of the listed multivalent salts or the multivalent metal salt may consist of, or consist essentially of, just one of the listed multivalent metal salts. In particular, the multivalent metal salt may be (e.g. consist essentially of, or consist of) calcium chloride ($CaCl_2$). Other suitable examples are magnesium chloride and calcium hydroxide. The metal salts may be provided in hydrated form. For example the metal salts may be in the form $MX_2.2H_2O$, wherein X is the anion, e.g. $CaCl2.2H_2O$. The metal salts may also be provided in anhydrous form. Other particularly suitable multivalent metal salts may be (e.g. consist essentially of, or consist of) calcium sulphate, for example gypsum (calcium sulphate di hydrate) or calcium sulphate hemi hydrate, or calcium sulphate anhydrate, for example phosphate derivatives of calcium sulphate anhydrate.

The amount of multivalent metal salt in the coating composition may be equal to or greater than about 0.01wt% or equal to or greater than about 0.05wt% or equal to or greater than about 0.1wt%. The amount of multivalent metal salt in the coating composition may be present in an amount up to about 25wt% (or less than 25wt%) or up to about 15wt% or up to about 12.5wt%, or up to about 5wt% or up to about 3wt%. For example, the amount of multivalent metal salt in the coating composition may be present in an amount of about 0.01wt% to about 3wt%, for example about 0.05wt% to about 3wt%, for example about 0.1wt% to about 1.0wt%. The amounts of multivalent salt are based on the total dry weight of the coating composition.

The amount of dried multivalent metal salt in the dried substrate or dried paper may be about 0.01wt% to about 0.4wt%, for example about 0.02wt% to about 0.3wt%, for example about 0.05wt% to about 0.2wt%, based on the total weight of the final dried substrate or dried paper. The amount of dried multivalent metal salt in the dried substrate or dried paper may be up to about 8wt% based on the total weight of the final dried substrate or dried paper.

The concentration of dried multivalent metal salt in the dried substrate or dried paper may be about 0.01gsm to about 1gsm or about 0.02gsm to about 0.3gsm, for example about 0.03gsm to about 0.2gsm. The concentration of dried multivalent metal salt in the dried substrate or dried paper may be up to about 2.5gsm.

The amount of multivalent metal salt (e.g. $CaCl_2$ or calcium sulphate) to be used may be such that a total pickup of about 0.1gsm is provided. The amount of multivalent metal salt may be adjusted depending on the total size pickup and the total number of parts in the formulation. The parts in the formulation may be equal to:

$$(0.1/\text{total pickup in gsm}) \times (\text{parts of pigment} + \text{parts of starch} + \text{parts of OBA});$$

wherein OBA is an optical brightening agent. The total pickup is the mass per area picked up at a size press or coating station. "Parts of" in the formulation represents the parts of the specified component in the coating formulation.

*The non ionic dispersant*

The pigment composition may comprise a non ionic dispersant (or a non ionic surfactant). There may be present one, or more than one, non ionic dispersants. The non ionic dispersant may be the only dispersant present in the pigment composition or there may be at least one other ionic dispersant present in the pigment composition. The non ionic dispersant may comprise an anchor group or groups and a tail group. The non ionic dispersant may be a non electrostatically stabilising dispersant. The non ionic dispersant may comprise a non ionic polymer or non ionic oligomer and optionally a charged or uncharged anchor group or groups. The non ionic dispersant may be a non electrostatically stabilising dispersant comprising a non ionic polymer or non ionic oligomer and optionally a charged or uncharged anchor group or groups. The anchor group (or groups) anchors the non ionic dispersant to the inorganic particulate material. The polymer or oligomer may be referred to as the tail group.

Without wishing to be bound by a particular theory, the non ionic dispersant is used to control the viscosity of the coating composition. The non ionic dispersant is tolerant of the multivalent salt such that effective stabilisation of the pigment composition and coating composition is achieved. Advantageously, the performance of the non ionic dispersant is maintained or not significantly altered by high ionic strength. For example, the performance of the non ionic dispersant is maintained or not significantly altered by an ionic strength > $10mM/dm^3$ and up to about $500mM/dm^3$. The performance of the dispersant may be assessed by taking viscosity measurements of the coating composition, for example the Brookfield viscosity at 25°C. The ionic strength is measured at 25°C. The non ionic dispersant is polymeric.

The non ionic dispersant may be a homo-polymer or a co-polymer. The polymer may be a crosslinked polymer. The non ionic dispersant may comprise alkylene oxide monomers, for example ethylene oxide monomers. The non ionic dispersant may comprise an uncharged hydrophobic chain and at least one anchor, or end, group such as an amine or phosphate group. The non ionic dispersant may comprise at least one phosphate group, for example one or more phosphate anchor or end groups. For example, the non ionic dispersant may terminate with $-OP(O)(OH)-P(O)(OH)_2$ or with $-OP(O)(OH)_2$. The non ionic dispersant may comprise $(HO)_2(O)P-O-[-CH_2CH_2O-]_m-[-CH_2CH(CH_3)O-]_n-P(O)(OH)_2$ wherein m is chosen from about 45 to about 55, for example about 53 and n is chosen from about 25 to about 35, for example about 33; the molecular weight may typically be about 4,500 or less than about 4,500. The non ionic dispersant may comprise $(HO)_2(O)P-O-P(O)(OH)O-[-C(CH_3)CH_2O-]_n-[-CH_2CH_2O-]_m-$ wherein m is chosen from about 25 to about 35 and n is chosen from about 5 to about 10, for example about 8; the molecular weight may be about 1000 or less than about 1100.

The non ionic dispersant may comprise at least one amine group, for example one or more amine anchor or end groups. Suitable examples of non ionic dispersants include polymers comprising sulfonate and/or sulphate groups. Other suitable non ionic dispersants include copolymers, e.g. block copolymers, for example a PEO/PPO (poly(ethylene oxide)-poly(propylene oxide)) block copolymer comprising a phosphate group at the end of the chain and wherein the molecular weight is about 1000.

Further, and without wishing to be bound by a particular theory, the use of non ionic dispersants in accordance with certain embodiments of the present invention may mean a protective colloidal layer around the inorganic particulate material (or pigment) does not collapse or breakdown to any significant degree in the presence of multivalent salt and the rheology is not adversely affected. It is not a requirement, in accordance with certain embodiments of the present invention, for the inorganic particulate material to be charged and therefore be present in cationic form. Compositions described in connection with certain embodiments of the present invention may cause the ink to agglomerate and not to penetrate very far into the coating structure on the surface of the substrate. This type of dispersion is advantageous in connection with high speed coating applications. Known coating compositions tend to be difficult to apply in high speed paper coating processes.

In addition to the presence of a non ionic dispersant in the pigment composition and coating composition, there may also, optionally, be present a dispersant other than a non ionic dispersant. For example, there may be present one, or more than one, ionic dispersants. A suitable example of such a dispersant is sodium polyacrylate. Advantageously, a 50:50 blend (by dry weight) of GCC and PCC may be prepared wherein the GCC has been dispersed with sodium polyacrylate and the PCC has been dispersed with a non ionic dispersant, for example a non ionic dispersant comprising phosphate or amine. The non ionic dispersant comprising phosphate may comprise a phosphate group or groups. The phosphate group or groups may be anchor or end groups. For example, the non ionic dispersant may terminate with -OP(O)(OH)-P(O)(OH)$_2$ or with -OP(O)(OH)$_2$. The non ionic dispersant may comprise (HO)$_2$(O)P-O-[-CH$_2$CH$_2$O-]$_m$-[-CH$_2$CH(CH$_3$)O-]$_n$-P(O)(OH)$_2$ wherein m is chosen from about 45 to about 55, for example about 53 and n is chosen from about 25 to about 35, for example about 33; the molecular weight may typically be about 4,500 or less than about 4,500. The non ionic dispersant may comprise (HO)$_2$(O)P-O-P(O)(OH)O-[-C(CH$_3$)CH$_2$O-]$_n$-[-CH$_2$CH$_2$O-]$_m$- wherein m is chosen from about 25 to about 35 and n is chosen from about 5 to about 10, for example about 8; the molecular weight may be about 1000 or less than about 1100. The non ionic dispersant may comprise an amine group or groups. The amine group or groups may be end groups. The non ionic dispersant may be an ethoxylated polymer with one or more amine groups. The present inventors have found that the use of the non ionic dispersant provides particularly good rheology properties combined with good print quality. They have also found that a combination of dispersants (non ionic and ionic) may further improve the print quality.

The amount of non ionic dispersant present may be at least 0.3wt% to about 1.5wt%, for example about 1.25wt% based on the dry weight of the inorganic particulate material. The non ionic dispersant may be the same dispersant used in the grinding of the inorganic particulate material.

The amount of ionic dispersant, when present, may be about 0.3wt% to about 2wt% based on the dry weight of the inorganic particulate material. The amounts of dispersant are expressed as the wt% of active content of the dispersant. The non ionic dispersant or dispersants may be the only type of dispersant present in the pigment composition and/or coating composition.

*Pigment composition*

The pigment composition comprises an inorganic particulate material, a multivalent salt and a non ionic dispersant.

The pigment composition may be prepared by blending or combining the inorganic particulate material, non ionic dispersant and multivalent metal salt.

In forming the pigment composition, the inorganic particulate material may be dispersed using a suitable ionic dispersant, for example sodium polyacrylate, or a suitable non ionic dispersant, for example a dispersant possessing one or more phosphate end groups or amine groups. If the inorganic particulate material consists of, consists essentially of, or comprises a ground inorganic particulate material such as GCC, the dispersant may at least partially be incorporated during grinding of the inorganic particulate material. If the inorganic particulate material consists of, consists essentially of, or comprises PCC, and a PCC cake is used, the dispersant may be used to make down the presscake. If the inorganic particulate material consists of, consists essentially of, or comprises kaolin, then the dispersant may be combined with the kaolin which is in a dry or essentially dry form or may be present as an aqueous slurry. The dispersant may therefore be used in the makedown and/or dispersion process. The pH of the pigment composition may be adjusted. For example, sodium hydroxide may be added to a slurry or dispersion, for example a kaolin slurry or dispersion to adjust the pH to at least about 7.

One or more binders may be added to the inorganic particulate material or pigment composition using a high speed mixer followed by the addition of a multivalent, for example divalent, salt. The multivalent or divalent salt may be added to the inorganic particulate material prior to the addition of at least one binder. In the production of a blend comprising inorganic particulate materials, the inorganic particulate materials may be blended using a high work input mixer. A suitable blend of inorganic materials is a 50:50 blend of PCC and GCC or a blend of PCC and/or GCC plus kaolin (which may be hydrous or calcined).

Particularly useful embodiments provide pigment compositions (and coating compositions) wherein the inorganic particulate material consists essentially of or consists of (i) calcium carbonate or (ii) calcium carbonate and talc, either of which may be in combination with a multivalent metal salt which consists of, or consists essentially of, calcium sulphate (e.g. calcium sulphate di hydrate or calcium sulphate hemi hydrate or calcium sulphate anhydrate or phosphate derivatives thereof) or calcium chloride.

*The Coating Composition*

The coating composition may comprise water and binder in addition to the pigment composition. Optionally, a small amount of thickener such as carboxymethyl cellulose may be present.

The coating composition may be made by combining the pigment composition in accordance with certain embodiments of the present invention with the other constituents of the coating composition. Alternatively, the coating composition may be made by combining an aqueous composition of the inorganic particulate material and non ionic dispersant with a binder and multivalent salt. The binder and multivalent salt may be combined with the inorganic particulate material and dispersant in any order. For example, the multivalent metal salt may be added to an aqueous composition of an inorganic particulate material and non ionic dispersant and at least one binder.

Suitable materials for use as binders and/or cobinding agents in paper coating compositions are generally known in the art. Suitable materials for use as binders are latex and starch or starch derivatives, sodium carboxymethyl cellulose, polyvinyl alcohol, proteins. The present inventors have found that blends of binders may be particularly advantageous for use in certain embodiments of the present invention. For example, blends consisting of, consisting essentially of, or comprising: PVOH and latex; or starch and latex. Said blends are particularly useful for providing a low set off density, for example of about 0.6 or less. The binder may not be a blend and may consist essentially of, or consist of, PVOH or latex; For example, the binder may comprise at least 99wt% latex or at least 99wt% PVOH or the binder may be 100wt% latex or 100wt% PVOH.

The latex binder may comprise, for example, one or more of the following: a styrenebutadiene rubber latex, an acrylic polymer latex, a polyvinyl acetate latex or a styrene acrylic copolymer latex. The latex, may, optionally, be carboxylated. Commercially available latex products are typically sold as aqueous emulsions containing 50wt% latex. These products are suitable for use in the present invention.

The binder may form from about 1 part, for example from about 3 parts or from about 5 parts, to about 200 parts per 100 parts of dry inorganic particulate material of the coating composition. The binder may form from about 3 parts to about 5 parts per 100 parts of dry inorganic particulate material of the coating composition. For example, the coating composition may comprise about 3 parts of latex per 100 parts of dry inorganic particulate material and about 3 parts of PVOH per 100 parts of dry inorganic particulate material.

The coating composition according to the present invention may contain one or more optional additional components, if desired. Such additional components, where present, are suitably selected from known additives for paper coating compositions. Some of these optional additives may provide more than one function in the coating composition. Examples of known classes of optional additives are as follows:

**(a) one or more additional pigments:** the inorganic particulate materials described for use in certain embodiments of the present invention may be used as sole pigments in the paper coating compositions, or may be used in conjunction with one another or with other known pigments, such as for example, calcium sulphate, satin white, and so called 'plastic pigment'. When a mixture of pigments is used the total pigment solids content is preferably present in the composition in an amount of at least about 80wt% of the total weight of the total coating composition;

**(b) one or more cross linkers:** e.g. in levels of up to about 5% by weight; for example glyoxals, melamine formaldehyde resins, ammonium zirconium carbonates; **one or more dry or wet pick improvement additives:** e.g. in levels up to about 2% by weight, for example melamine resin, polyethylene emulsions, urea formaldehyde, melamine formaldehyde, polyamide, calcium stearate, styrene maleic anhydride and others; **one or more dry or wet rub improvement and/or abrasion resistance additives:** e.g. in levels up to about 2% by weight, for example glyoxal based resins, oxidised polyethylenes, melamine resins, urea formaldehyde, melamine formaldehyde, polyethylene wax, calcium stearate and others; **one or more water resistance additives:** e.g. in levels up to about 2% by weight, e.g. oxidised polyethylenes, ketone resin, anionic latex, polyurethane, SMA, glyoxal, melamine resin, urea formaldehyde, melamine formaldehyde, polyamide, glyoxals, stearates and other materials commercially available for this function;

**(c) one or more water retention aids:** e.g. in levels up to about 2% by weight, for example sodium carboxymethyl cellulose, hydroxyethyl cellulose, PVOH (polyvinyl alcohol), starches, proteins, polyacrylates, gums, alginates, polyacrylamide bentonite and other commercially available products sold for such applications;

**(d) one or more viscosity modifiers and/or thickeners:** e.g. in levels up to about 2% by weight; for example acrylic associative thickeners, polyacrylates, emulsion copolymers, dicyanamide, triols, polyoxyethylene ether, urea, sulphated castor oil, polyvinyl pyrrolidone, CMC (carboxymethyl celluloses, for example sodium carboxymethyl cellulose), sodium alginate, xanthan gum, sodium silicate, acrylic acid copolymers, HMC (hydroxymethyl celluloses), HEC (hydroxyethyl celluloses) and others;

**(e) one or more lubricity/calendering aids:** e.g. in levels up to about 2% by weight, for example calcium stearate, ammonium stearate, zinc stearate, wax emulsions, waxes, alkyl ketene dimer, glycols; **one or more gloss-ink hold-out additives:** e.g. in levels up to about 2% by weight, for example oxidised polyethylenes, polyethylene emulsions, waxes, casein, guar gum, CMC, HMC, calcium stearate, ammonium stearate, sodium alginate and others;

**(f) one or more dispersants:** a dispersant is a chemical additive capable, when present in a sufficient amount, of acting on the particles of the particulate inorganic material to prevent or effectively restrict flocculation or agglomeration of the particles to a desired extent, according to the normal processing requirements. The coating composition in accordance with certain embodiments of the present invention may comprise one or more than one non ionic dispersant; Suitable examples of non ionic dispersants are those comprising one or more phosphate groups or one or more amine groups. The dispersant may be present in levels up to about 2% by weight. Suitable examples of dispersants which may optionally be present are selected, by way of example, from polyelectrolytes such as polyacrylates and copolymers containing polyacrylate species, especially polyacrylate salts (e.g. sodium and aluminium optionally with a group II metal salt), sodium hexametaphosphates, non ionic polyol, polyphosphoric acid, condensed sodium phosphate, non ionic surfactants, alkanolamine and other reagents commonly used for this function. The dispersant may, for example, be selected from conventional dispersant materials commonly used in the processing and grinding of inorganic particulate materials. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g. polymetaphosphate salts [general form of the sodium salts: $(NaPO_3)_x$] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000. Sodium hexametaphosphate and sodium polyacrylate, the latter suitably having a weight average molecular mass in the range of about 1,500 to about 10,000, are especially preferred;

**(g) one or more antifoamers/defoamers:** e.g. in levels up to about 1% by weight, for example blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially to carry out this function;

**(h) one or more optical brightening agents (OBA) and/or fluorescent whitening agents (FWA):** e.g. in levels up to about 1% by weight, for example stilbene derivatives. An example of a suitable OBA is Tinopal ABP-A;

**(i) one or more dyes:** e.g. in levels up to about 0.5% by weight;

**(j) one or more biocides/spoilage control agents:** e.g. in levels up to about 1% by weight, for example metaborate, sodium dodecylbenene sulphonate, thiocyanate, organosulphur, sodium benzoate and other compounds sold commercially for this function e.g. the range of biocide polymers sold by Nalco;

**(k) one or more levelling and evening aids:** e.g. in levels up to about 2% by weight, for example non ionic polyol, polyethylene emulsions, fatty acid, esters and alcohol derivatives, alcohol/ethylene oxide, calcium stearate and other compounds sold commercially for this function;

**(l) one or more grease and oil resistance additives:** e.g. in levels up to about 2% by weight, e.g. oxidised polyethylenes, latex, SMA (styrene maleic anhydride), polyamide, waxes, alginate, protein, CMC, HMC.

Any of the above additives and additive types may be used alone or in admixture with each other and/or with other additives, if desired.

For all of the above additives, and unless otherwise stated, the percentages by weight quoted are based on the dry weight of solids (100%) present in the coating composition. Where the additive is present in a minimum amount, the minimum amount may be about 0.01% by weight based on the dry weight of solids.

The present inventors have found that blends comprising or consisting of PVOH and latex are particularly advantageous in providing a good balance of properties. For example, the PVOH assists in lowering the viscosity of the coating composition and the latex assists in lowering the set off tendency of the printed ink.

Paper coating compositions, or suspensions, (commonly referred to as coating colours) are typically high solids dispersed systems. The solids content and viscosity of the coating colour when applied to the paper may be significant. For example, if the solids content of the coating colour is too high, then the viscosity will be too high for easy metering and runnability problems may result, giving rise to so-called scratching and splashing. However, if the solids content is too low, the coating will flow too easily in the basepaper pores and poor coverage will result. In addition, there will be more water to remove thermally and the basepaper fibres may swell and reduce the quality further. At the desired levels of solids and viscosity, the coating does not penetrate into the pores, so it is held out onto the surface of the paper and is able to give a smooth surface. The solids content in the colour solids is typically about 10wt% to about 80wt%.

*The Coating Process*

The coating compositions in accordance with certain embodiments of the present invention may be used for coating substrates, particularly paper products. The term paper products, as used in connection with certain embodiments of the present invention, should be understood to mean all forms of paper, including board, card, paperboard, and the like. However, the compositions in accordance with certain embodiments of the present invention are particularly suited for coating paper which is for use in inkjet printing. The substrate can be of any basis weight. For example, the substrate basis weight may be from about 20g/m$^2$ to about 500g/m$^2$. The basis weight may be from about 20g/m$^2$ to about 300g/m$^2$, for example from about 50g/m$^2$ to about 200g/m$^2$, or the basis weight may be from about 60g/m$^2$ to about 120g/m$^2$. The substrate may be a plastic paper or a plastic substrate.

The coating process may be carried out using techniques which are well known to the skilled person. The coating process may also involve calendaring or supercalendering the coated paper.

Methods of coating paper and other sheet materials, and apparatus for performing the methods, are widely published and well known. Such known methods and apparatus may conveniently be used for preparing coated paper. For example, there is a review of such methods published in Pulp and Paper International, May 1994, page 18 et seq. Sheets may be coated on the sheet forming machine, i.e., "on-machine," or "off-machine" on a coater or coating machine. Use of high solids compositions is desirable in the coating method because it leaves less water to evaporate subsequently. However, the solids level should not be so high that high viscosity and leveling problems are introduced. The methods of coating may be performed using apparatus comprising (i) an application for applying the coating composition to the material to be coated; and (ii) a metering device for ensuring that a correct level of coating composition is applied. When an excess of coating composition is applied to the applicator, the metering device is downstream of it. Alternatively, the correct amount of coating composition may be applied to the applicator by the metering device, e.g., as a film press. At the points of coating application and metering, the paper web support ranges from a backing roll, e.g., via one or two applicators, to nothing (i.e., just tension). The time the coating is in contact with the paper before the excess is finally removed is the dwell time - and this may be short, long or variable.

The coating is usually added by a coating head at a coating station. According to the quality desired, paper grades are uncoated, single coated, double coated and even triple coated. When providing more than one coat, the initial coat (precoat) may have a cheaper formulation and optionally coarser pigment in the coating composition. A coater that is applying coating on each side of the paper, will typically have two or four coating heads, depending on the number of coating layers applied on each side. Most coating heads coat only one side at a time, but some roll coaters (e.g., film press, gate roll, size press) coat both sides in one pass.

Examples of known coaters which may be employed include, without limitation, air knife coaters, blade coaters, rod coaters, bar coaters, multi-head coaters, roll coaters, roll/blade coaters, cast coaters, laboratory coaters, gravure coaters, kisscoaters, liquid application systems, reverse roll coaters, curtain coaters, metered size press coaters, spray coaters and extrusion coaters.

Advantageously, the coating composition in accordance with certain embodiments of the present invention may be applied using a high speed blade coater at a high solids content (for example >60wt%) at 1000m/min with minimal or no runnability issues.

Water may be added to the solids comprising the coating composition to give a concentration of solids which is preferably such that, when the composition is coated onto a sheet to a desired target coating weight, the composition has a rheology which is suitable to enable the composition to be coated with a pressure (e.g. a blade pressure) of ranging from about 1 to about 1.5 bar.

Calendering is a well known process in which paper smoothness and gloss is improved and bulk is reduced by passing a coated paper sheet between calender nips or rollers one or more times. Usually, elastomer coated rolls are employed to give pressing of high solids compositions. An elevated temperature may be applied. One or more (e.g. up to about 12, or sometimes higher) passes through the nips may be applied. The coated paper in accordance with certain embodiments of the present invention may be calendered or supercalendered.

The coating composition may be applied to either an uncoated paper, for example a woodfree or mechanical fiber containing basepaper or a basepaper which has been precoated. The precoat may be designed to be 'open' and allow easy flow of water through into the basepaper. This precoat may have a reduced level of binder and may comprise a calcium carbonate with a narrow particle size distribution, which allows a larger pore size and pore volume in the coating layer. An inorganic particulate material possessing a standard particle size distribution may be used in the precoat. For example, a particle size distribution known in the art for calcium carbonate may be used in the precoat. However, if this is the case a basepaper with a higher water absorbency (e.g. Cobb value) may be required. Optionally, a small amount of an additional mineral possessing a high surface area can be present in the coating composition to further facilitate fluid flow through the precoat. The presence of a precoat in the coating composition affords a significantly increased gloss coating and higher print gloss to be obtained. However, advantageously the pigment composition and coating composition in accordance with certain embodiments of the present invention still enhances the paper media's performance in an inkjet press even without a specifically designed precoat.

The basepaper may have a high Cobb value. For example, the Cobb value of the basepaper may be greater than about 40gsm or greater than about 60gsm. In embodiments of the invention, the Cobb value of the basepaper may be greater than about 20gsm. The Cobb value is measured in accordance with Tappi Test Method T441. When the basepaper has a high Cobb value, for example greater than about 40gsm, or greater than about 60gsm, it may be coated with a precoat which possesses a steep inorganic particulate material. The basepaper may have a high Cobb value, for example greater than about 40gsm or greater than about 60gsm when the base paper is precoated or is not precoated. The particulate inorganic material (e.g. calcium carbonate) for use in the precoat may have a particle size distribution steepness factor greater than about 25, for example greater than about 40 or greater than about 45 or greater than about 50. The particulate inorganic material for use in the precoat may have a particle size distribution steepness factor of about 25 to about 60.

## Brief Description of the Figures

The invention will now be described, by way of example only and without limitation, with reference to the following Figures and Examples, in which:

Figure 1 is a graph of the low shear viscosity of various coating compositions plotted against the percentage solids in connection with Example 1.

Figure 2 is a graph of the high shear viscosity of various coating compositions plotted against the percentage solids in connection with Example 1.

Figure 3 is a bar chart comparing the overall (inkjet) quality parameter for a range of coatings in connection with Example 1.

Figure 4 is a bar chart comparing the contrast parameter for a range of coatings in connection with Example 1.

Figure 5 is a bar chart comparing the line quality parameter for a range of coatings in connection with Example 1.

Figure 6 is a bar chart comparing the print density for a range of coatings in connection with Example 1.

Figure 7 is a bar chart comparing the reflection print density for a range of coatings in connection with Example 2.

Figure 8 is a bar chart comparing the smearing index for a range of coatings in connection with Example 2.

Figure 9 is a bar chart comparing the line quality parameter for a range of coatings in connection with Example 2.

## Examples

### Test Methods

#### Brookfield Viscosity (low shear)

The Brookfield viscosity values were measured at ambient temperature (22°C) using a Brookfield Viscometer set to operate at a spindle speed of 100rpm. The coating composition was thoroughly mixed using a Heidolph ST-1 laboratory stirrer. Immediately after mixing, the composition was transferred to the viscometer. The viscometer spindle was immersed in the composition. The viscometer spindle was activated 30 seconds after cessation of homogenisation and the viscosity was recorded a further 15 seconds later.

*High Shear Viscosity*

The high shear viscosity was measured on a Bohlin CSR rheometer using a 0.5° cone at $13000s^{-1}$.

*Print Quality*

The print quality was assessed by comparing the contrast between yellow and black areas and the evenness of a black band through a yellow background. Image analysis was carried out by printing inkjet samples.

Each inkjet printed sample was scanned using an Epson V500 Photo scanner at 600 dpi and 24-bit colour and constant settings. All of the automatic corrections were turned off and the same histogram settings (0, 1.0, 255:0, 255) were used for all of the samples. An image of 500x300 pixels was collected in the area where there was a black band running across a yellow background. This coloured image was then converted into a 256 greyscale image for use in the analysis. A line profile was taken through the black band. For an acceptable or good quality print, the profile was relatively smooth (low mottle) and angular with steep sides and a flat bottom. For a poorer quality print, there is more variation in the line profile and the black band.

The difference between the black and yellow intensity is a measure of the print contrast, wherein the black intensity is the average of all the minimum black points from the profiles taken from the greyscale images and the yellow intensity is the average of the yellow background from the profiles taken from the RGB colour images.

The difference between the yellow average intensity and the black minimum intensity is a measure of the contrast parameter (a higher value is better).

The line width parameter is equal to the width at 25% between the yellow intensity and the black intensity divided by the width at 75% between the yellow intensity and the black intensity. Similar width values are better. This metric gives an indication of the amount of ink spread and the degree of mottle or unevenness occurring in connection with the printed black bar.

The overall quality (inkjet) parameter is the line width parameter divided by the contrast parameter. A higher value indicates a better quality print.

The (reflection) print density is measured using a Gretag SpectroEye Densitometer. The print density values assist in obtaining a full estimate of the colour intensity of the print.

Smearing Index

To determine the smearing index, a testprint is made using a desktop printer filled with commercially available pigment based inkjet inks. The test contains areas of 100% black ink, printed as approximately $1cm^2$ blocks. 15 seconds after the print has been made, a finger from a skilled operator covered with a rubber glove, is contacted with the black printed square and then pulled downwards applying a constant firm pressure. Any non dry, non immobilized ink will be dragged onto the unprinted portion of the paper. The degree of ink transfer to the paper is assessed visually and given a ranking out of 10, where 10 indicates no transfer of ink, i.e. the print has dried. A score of around 5 or 6 indicates considerable transfer of ink. The test provides a reasonable comparison between different papers when printed using the same printer and the same ink.

Samples

Calcium carbonate A is a PCC commercially available from Imerys Minerals UK Ltd and has a $d_{50} = 0.4 \mu m$.

Calcium carbonate B is a finely ground calcium carbonate (GCC) commercially available from Imerys Minerals UK Ltd. The particle size distribution of the sample was such that 78wt% of the dry material possessed an esd of $< 1 \mu m$ and $d_{50} = 0.5$-$0.55 \mu m$.

Talc A is a coarse filler talc commercially available from Imerys Minerals Ltd, wherein 13wt% $< 2 \mu m$ and the surface area is $3.1 m^2/g$.

Solplus D570 is a non ionic dispersant commercially available from Lubrizol.

Dispersant A is a low molecular weight polyacrylic acid dispersant fully neutralised as the sodium salt.

Binder A is a carboxylated styrene butadiene latex binder having about 50% solids and a glass transition temperature of about 20°C that is commercially available.

Binder B is a partially hydrolysed polyvinyl alcohol that is commercially available.

Binder C is a polyvinyl acetate emulsion binder containing approximately 50% of solids and is commercially available.

Binder D is a commercially available partially hydrolysed polyvinyl alcohol (from acetic acid ethenyl ester polymer with ethanol).

## Example 1

A presscake of calcium carbonate A was prepared in the absence of dispersant comprising about 74wt% solids.

The amount of dispersant was determined by using the dispersant Solplus D570. Small portions of the dispersant were added to the PCC presscake and were stirred initially by hand and then by using a laboratory stirrer. The amount of dispersant added was monitored to obtain a cumulative amount. When the slurry became fluid enough to measure the viscosity, a Brookfield viscometer was used to measure the viscosity at a speed of 100rpm, which gave a shear rate of $31s^{-1}$. The dispersant was added until a minimum in the viscosity was reached.

The dispersant was used to disperse the PCC cake which was made up into a number of coating compositions using 3pph PVOH (Binder B) and 3pph latex (Binder A). The total amount of inorganic particulate material present was 100 parts dry weight. The binders and any other additives are expressed with respect to the total amount of inorganic particulate material (for example 3pph latex is 3 parts of latex per 100 parts total of inorganic particulate material). The required amount of calcium chloride ($CaCl_2$) was added to the coating composition and the viscosities of the coating compositions measured under low shear and high shear conditions. The aqueous coating compositions made up in accordance with Example 1 are referred to as coating compositions A - D and further details relating to the formulations are set out below. In the following formulations, the amounts of dispersant present are expressed on the basis of the dry weight of the inorganic particulate material (in this case calcium carbonate).

### Coating composition A (for comparison)

Coating composition A is a commercially available aqueous slurry of a 50wt%:50wt% mix of calcium carbonate A and calcium carbonate B which has been dispersed with about 0.85wt% sodium polyacrylate. 3.16pph calcium chloride was added to the commercially available slurry.

### Coating composition B

Coating composition B comprises a 50wt%:50wt% blend of calcium carbonate A and calcium carbonate B. Calcium carbonate A was dispersed with 1.25wt% Solplus D570. Calcium carbonate B was dispersed with 0.85wt% sodium polyacrylate. 3.16pph calcium chloride was added to the composition.

### Coating composition C

Coating composition C comprises calcium carbonate B dispersed with 1.25wt% Solplus D570. 3.16pph calcium chloride was added to the composition.

### Coating composition D (for comparison)

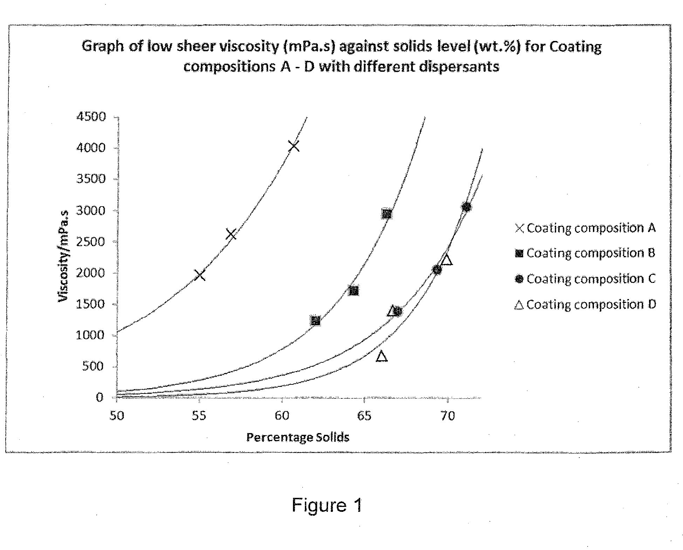

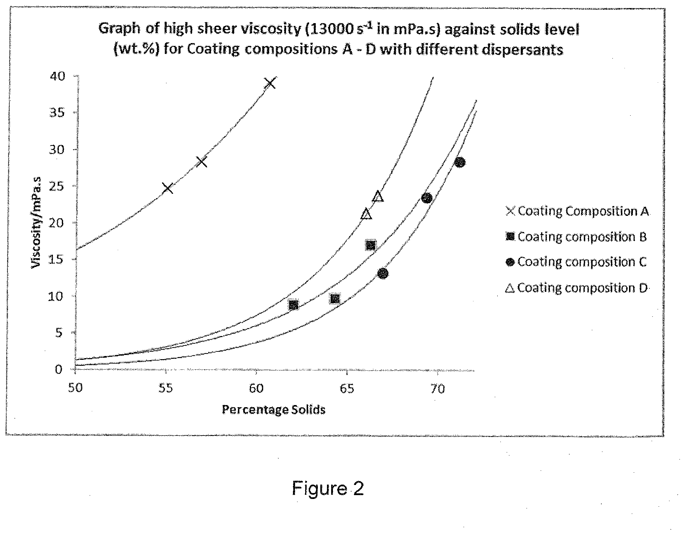

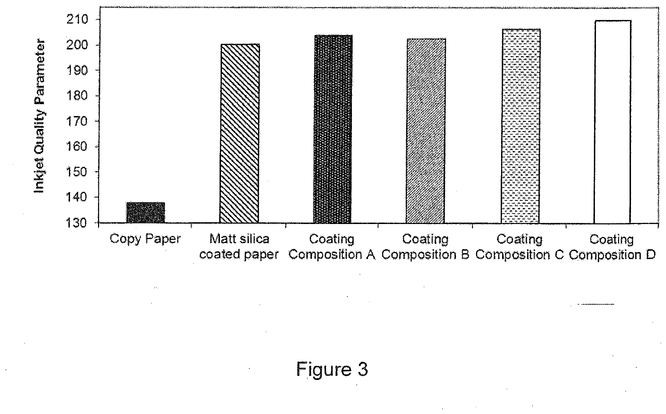

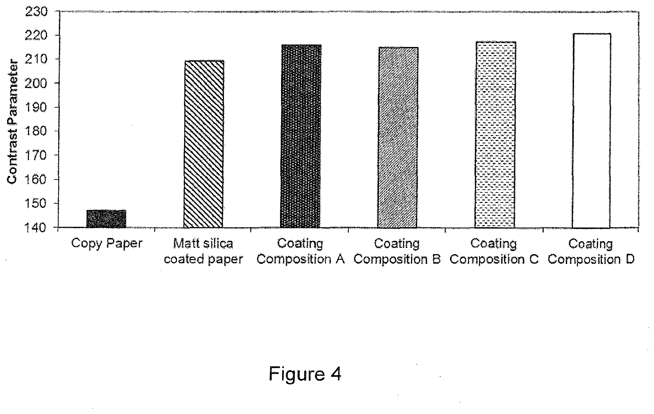

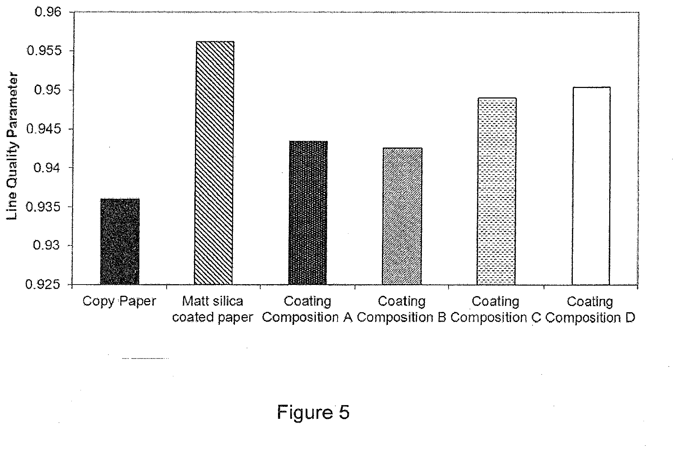

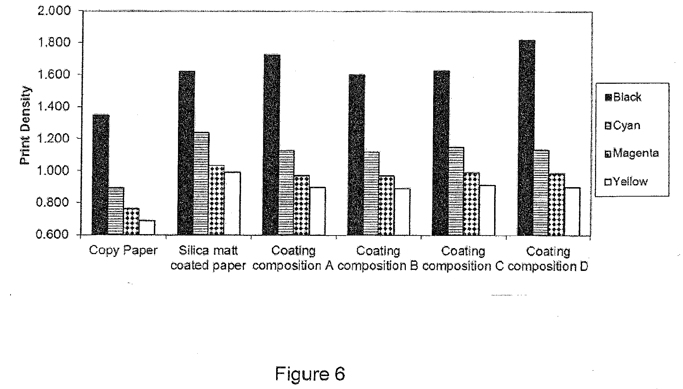

Coating composition D comprises calcium carbonate B dispersed with 0.43wt% Dispersant A. For the rheology measurements, the composition was too viscous to measure with $CaCl_2$, hence the rheology measurements were made on coating composition D without the presence of calcium chloride. The data in Figures 1 and 2 for coating composition D is in respect of the situation where no $CaCl_2$ is present. For Figures 3 to 6, 3.16pph $CaCl_2$ is present in coating composition D.

The rheology results are presented in Figures 1 and 2.

The aqueous coating compositions A - D were used to coat samples of Hammermill Paper (which is a commercially available inkjet paper from International Paper). The coating was applied using a hand draw down (HDD) technique using a wire wound bar. The solids content of the coating compositions were adjusted until the coatings were obtained with a coat weight of about 5 to about $7gm^{-2}$ (dry weight) on the paper. Also, for the purposes of comparison an HP premium paper (matt silica coated paper) for inkjet printing and a basic copy paper were assessed. The print quality results are presented in Figures 3 to 6.

The results in Example 1 indicate that it is possible to lower the viscosity of the coating compositions in accordance with the present invention which contain a multivalent salt to a level of that of a PCC coating composition which does not contain any salt. The coating and printing experiments showed that the coating compositions in accordance with the present invention provide similar print performance when compared with a standard dispersant (polyacrylate) which does not comprise a multivalent salt.

**Example 2**

Coating Composition E

Coating Composition E comprises a 75wt%:25wt% blend of calcium carbonate B and talc A. 15wt% of calcium sulphate was added to the composition. The dispersant used to disperse the pigment blend was the non electrostatically stabilizing non ionic EO/PO (ethylene oxide / propylene oxide) block copolymer dispersant possessing a phosphate end group (approximate molecular weight of 1000) dosed at 1pph based on the dry weight of the calcium carbonate, talc and calcium sulphate. The calcium carbonate, talc and calcium sulphate were dispersed using the dispersant in a high speed mixer and then the binders were added to form the coating colour. The coating colour was screened through a 150$\mu$m mesh before use. The ratio of Binder C : Binder D was 8pph:2pph. The binders and any other additives are expressed with respect to the total amount of inorganic particulate material (for example 3pph latex is 3 parts of latex per 100 parts total of inorganic particulate material).

Coating Composition F

Coating Composition F comprises a 75wt%:25wt% blend of calcium carbonate B and talc A. 2wt% calcium chloride was added to the composition. The ratio of Binder C : Binder D was 8pph:2pph. The binders and any other additives are expressed with respect to the total amount of inorganic particulate material (for example 3pph latex is 3 parts of latex per 100 parts total of inorganic particulate material).

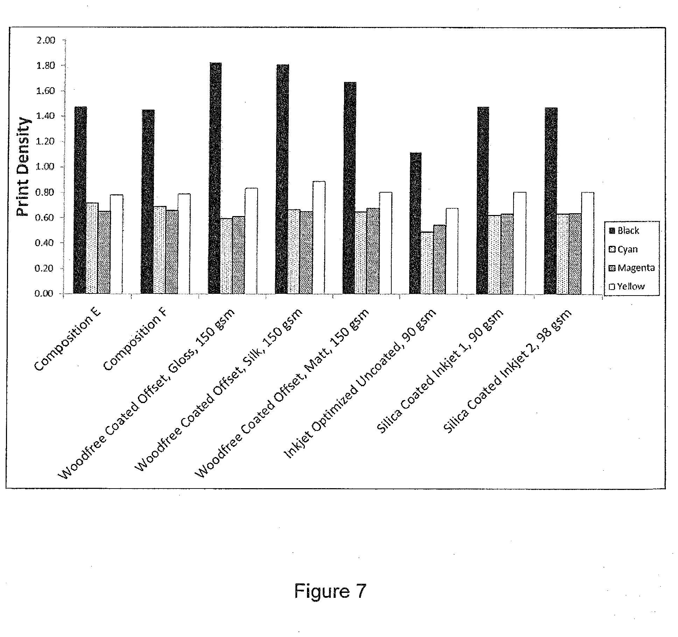

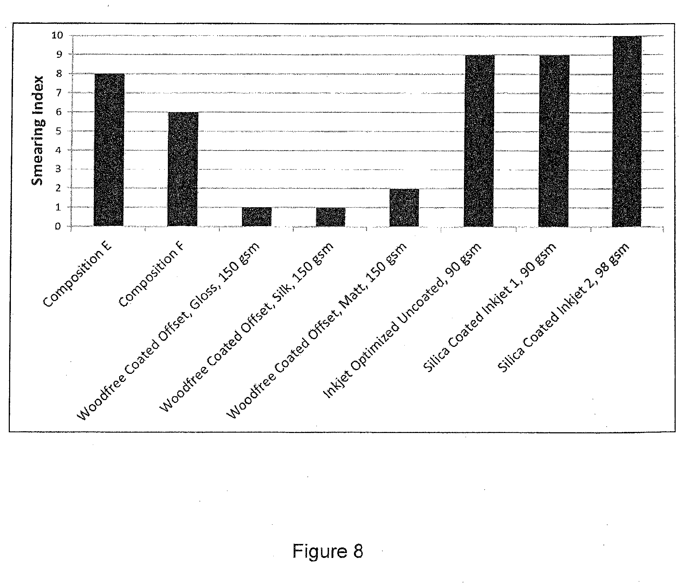

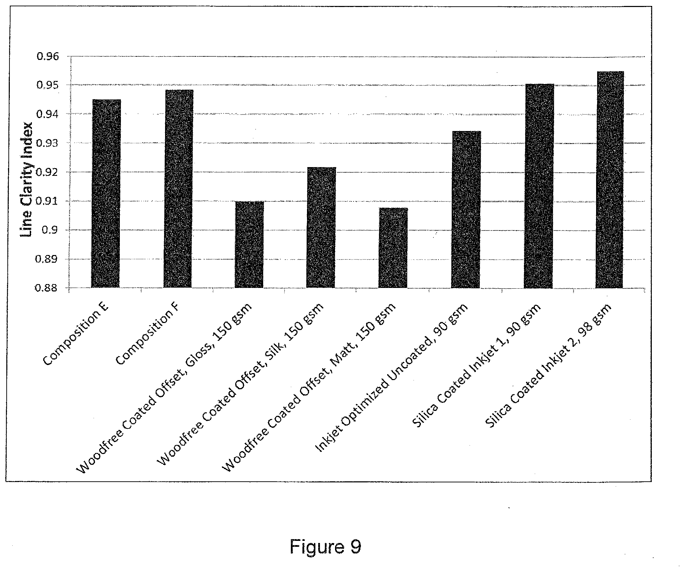

The aqueous coating compositions E and F were used to coat samples of woodfree basepaper (Cobb 22). The coating was applied using a hand draw down technique using a wire wound bar. The solids content of the coating compositions were adjusted until the coatings were obtained with a coat weight of about 5 to about 10gm$^{-2}$ (dry weight) on the paper. Also, for the purposes of comparison, the coating compositions E and F were compared to a number of different coated papers: offset gloss (150gsm basis weight), offset silk (150gsm), offset matt (150gsm), inkjet opt (i.e. optimized for an inkjet printer), uncoated (80gsm woodfree paper), silica coated 1, silica coated 2. The print density results are presented in Figure 7 and the smearing index and line clarity index results are presented in Figures 8 and 9.

The print densities in connection with the compositions comprising calcium sulphate and calcium chloride in accordance with the present invention are comparable with the commercially available offset papers and the silica coated papers and are higher than the uncoated inkjet paper.

Despite the high colour densities of the commercial offset papers, it can be seen that the ink drying and ink smearing when compared to the compositions of the present invention are worse. The papers comprising the use of compositions comprising calcium sulphate in accordance with the invention compare well with the silica paper and the uncoated paper and are improved when compared with the use of the calcium chloride containing composition. In Figure 8, a smearing index of 10 indicates that there is no smearing. The line quality index results show that the ink has not spread excessively.

For the avoidance of doubt, the present disclosure extends to the subject-matter in the following numbered paragraphs 1 to 75.

Paragraph 1. A pigment composition comprising an inorganic particulate material, a multivalent metal salt and a non ionic dispersant.

Paragraph 2. A pigment composition according to paragraph 1, wherein the inorganic particulate material is selected from one or more of: an alkaline earth metal carbonate or sulphate, a hydrous kandite clay, an anhydrous (calcined) kandite clay, talc or mica.

Paragraph 3. A pigment composition according to paragraph 1 or 2, wherein the inorganic particulate material is selected from one or more of: calcium carbonate, magnesium carbonate, dolomite, gypsum, kaolin, ball clay, metakaolin, fully calcined kaolin.

Paragraph 4. A pigment composition according to any one of paragraphs 1 to 3, wherein the inorganic particulate material consists of, consists essentially of, or comprises ground calcium carbonate (GCC) and/or precipitated calcium carbonate (PCC).

Paragraph 5. A pigment composition according to any one of paragraphs 1 to 3, wherein the inorganic particulate material consists of, consists essentially of, or comprises kaolin.

Paragraph 6. A pigment composition according to any one of paragraphs 1 to 3, wherein the inorganic particulate material consists of, consists essentially of, or comprises a blend of GCC and/or PCC plus kaolin.

Paragraph 7. A pigment composition according to paragraph 1 or 2, wherein the inorganic particulate material consists of, or consists essentially of, calcium carbonate and talc.

Paragraph 8. A pigment composition according to paragraph 7, wherein the calcium carbonate is GCC and/or PCC.

Paragraph 9. A pigment composition according to any one of paragraphs 1 to 8, wherein the inorganic particulate material has a $d_{50}$ of about 0.1 $\mu$m to about 2$\mu$m.

Paragraph 10. A pigment composition according to paragraph 9, wherein the inorganic particulate material has a dso of about 0.3$\mu$m to about 1.5$\mu$m.

Paragraph 11. A pigment composition according to paragraph 9, wherein the inorganic particulate material has a $d_{50}$ of about 0.3$\mu$m to about 0.7$\mu$m.

Paragraph 12. A pigment composition according to any one of paragraphs 1 to 11, wherein the inorganic particulate material has a particle size distribution steepness factor ($d_{30}$/$d_{70}$ x 100) of about 25 to about 70.

Paragraph 13. A pigment composition according to paragraph 12, wherein the steepness factor is about 45 to about 50.

Paragraph 14. A pigment composition according to paragraph 12, wherein the steepness factor is about 50 to about 70.

Paragraph 15. A pigment composition according to any one of paragraphs 1 to 14, wherein the multivalent metal salt is a divalent metal salt.

Paragraph 16. A pigment composition according to paragraph 15, wherein the divalent metal salt is an alkaline metal salt.

Paragraph 17. A pigment composition according to paragraph 16, wherein the alkaline metal salt is a calcium or magnesium or barium salt.

Paragraph 18. A pigment composition according to any one of paragraphs 1 to 17, wherein the anion of the metal salt is selected from chloride, sulphate, nitrate or hydroxide.

Paragraph 19. A pigment composition according to any one of paragraphs 1 to 17, wherein the multivalent metal salt is calcium chloride.

Paragraph 20. A pigment composition according to any one of paragraphs 1 to 18, wherein the multivalent metal salt is calcium sulphate.

Paragraph 21. A pigment composition according to paragraph 20, wherein the calcium sulphate is gypsum.

Paragraph 22. A pigment composition according to paragraph 20, wherein the calcium sulphate is calcium sulphate hemi hydrate.

Paragraph 23. A pigment composition according to paragraph 20, wherein the calcium sulphate is calcium sulphate anhydrate or a phosphate derivative thereof.

Paragraph 24. A pigment composition according to any one of paragraphs 1 to 23, wherein the non ionic dispersant is a polymer or non-polymer.

Paragraph 25. A pigment composition according to paragraph 24, wherein the non ionic dispersant is a polymer and comprises alkylene oxide monomers.

Paragraph 26. A pigment composition according to paragraph 24, wherein the non ionic dispersant is a polymer and comprises an uncharged hydrophobic chain.

Paragraph 27. A pigment composition according to any one of paragraphs 1 to 26, wherein the non ionic dispersant comprises amine and/or phosphate group or groups.

Paragraph 28. A pigment composition according to paragraph 24, wherein the non ionic dispersant is a polymer and the polymer comprises amine and/or phosphate group or groups.

Paragraph 29. A pigment composition according to any one of paragraphs 1 to 28, further comprising an ionic dispersant.

Paragraph 30. A pigment composition according to any one of paragraphs 1 to 29, wherein the amount of non ionic dispersant is at least about 0.3wt% to about 1.5wt% based on the dry weight of the inorganic particulate material.

Paragraph 31. A pigment composition comprising an inorganic particulate material and calcium chloride, wherein the inorganic particulate material is selected from one or more of: magnesium carbonate, dolomite, gypsum, a hydrous kandite clay (for example kaolin, ball clay) an anhydrous (calcined) kandite clay (for example metakaolin, fully calcined kaolin), talc or mica.

Paragraph 32. A pigment composition according to paragraph 31, wherein the inorganic particulate material further comprises calcium carbonate.

Paragraph 33. A pigment composition according to paragraph 32, wherein the calcium carbonate is ground calcium carbonate (GCC) and/or precipitated calcium carbonate (PCC).

Paragraph 34. A pigment composition according to paragraph 32, wherein the inorganic particulate material consists of, or consists essentially of, calcium carbonate and talc.

Paragraph 35. A pigment composition according to paragraph 34, wherein the calcium carbonate is GCC and/or PCC.

Paragraph 36. A pigment composition according to any one of paragraphs 31 to 33, wherein the inorganic particulate material consists of, consists essentially of, or comprises kaolin.

Paragraph 37. A pigment composition according to any one of paragraphs 31 to 33, wherein the inorganic particulate material consists of, consists essentially of, or comprises a blend of GCC and/or PCC plus kaolin.

Paragraph 38. A pigment composition according to any one of paragraphs 31 to 37, wherein the inorganic particulate material has a $d_{50}$ of about $0.1\mu m$ to about $2\mu m$.

Paragraph 39. A pigment composition according to paragraph 38, wherein the inorganic particulate material has a $d_{50}$ of about $0.3\mu m$ to about $1.5\mu m$.

Paragraph 40. A pigment composition according to paragraph 39, wherein the inorganic particulate material has a $d_{50}$ of about $0.3\mu m$ to about $0.7\mu m$.

Paragraph 41. A pigment composition according to any one of paragraphs 31 to 40, further comprising a non ionic dispersant.

Paragraph 42. A pigment composition according to paragraph 41, wherein the non ionic dispersant is a polymer or non-polymer.

Paragraph 43. A pigment composition according to paragraph 42, wherein the non ionic dispersant is a polymer and comprises alkylene oxide monomers.

Paragraph 44. A pigment composition according to paragraph 42, wherein the non ionic dispersant is a polymer and comprises an uncharged hydrophobic chain.

Paragraph 45. A pigment composition according to any one of paragraphs 41 to 44, wherein the non ionic dispersant comprises amine and/or phosphate group or groups.

Paragraph 46. A pigment composition according to paragraph 41 wherein the non ionic dispersant is a polymer and the polymer comprises amine and/or phosphate group or groups.

Paragraph 47. A pigment composition according to any one of paragraphs 41 to 46, wherein the amount of non ionic dispersant is at least about 0.3wt% to about 1.5wt% based on the dry weight of the inorganic particulate material.

Paragraph 48. A pigment composition according to any one of paragraphs 31 to 47, further comprising an ionic dispersant.

Paragraph 49. An aqueous coating composition comprising a pigment composition according to any one of paragraphs 1 to 48, water and at least one binder.

Paragraph 50. An aqueous coating composition according to paragraph 49, wherein the binder is selected from one or more of: latex, starch, starch derivatives, polyvinyl alcohol (PVOH), proteins.

Paragraph 51. An aqueous coating composition according to paragraph 49 or 50, wherein the binder comprises, consists of, or consists essentially of latex and PVOH or starch and latex.

Paragraph 52. An aqueous coating composition according to paragraph 50 or 51, wherein the latex binder is a styrene butadiene latex binder, which may be carboxylated, and the PVOH is a partially hydrolysed PVOH.

Paragraph 53. An aqueous coating composition according to any one of paragraphs 49 to 52, further comprising one or more of the following: one or more cross linkers, one or more water retention aids, one or more viscosity modifiers and/or thickeners, one or more antifoamers/defoamers, one or more optical brightening agents, one or more dyes, one or more biocides/spoilage control agents, one or more levelling and evening aids, one or more grease and oil resistance additives.

Paragraph 54. An aqueous coating composition according to any one of paragraphs 49 to 53, wherein the amount of multivalent metal salt in the coating composition is equal to or greater than about 0.01wt%, or equal to or greater than about 0.05wt%, or equal to or greater than about 0.1wt%.

Paragraph 55. An aqueous coating composition according to any one of paragraphs 49 to 54, wherein the amount of multivalent metal salt in the coating composition is present in an amount up to about 25wt% or less than 25wt%, or up to about 15wt%, or up to about 12.5wt%, or up to about 5wt%, or up to about 3wt%.

Paragraph 56. An aqueous coating composition according to any one of paragraphs 49 to 55, wherein the aqueous coating composition does not comprise a cationic polymer or a cationic dye.

Paragraph 57. An aqueous coating composition according to paragraph 56, wherein the excluded cationic polymer or cationic dye is a fixative or fixing agent.

Paragraph 58. A method of making the pigment composition according to any one of paragraphs 1 to 48 comprising combining the components of the pigment composition.

Paragraph 59. A method of making the aqueous coating composition according to any one of paragraphs 49 to 57, comprising combining the pigment composition according to any one of paragraphs 1 to 48 with water and at least one binder.

Paragraph 60. A method of making the aqueous coating composition according to any one of paragraphs 49 to 57, comprising combining the components of the aqueous coating composition.

Paragraph 61. A substrate coated with an aqueous coating composition according to any one of paragraphs 49 to 57.

Paragraph 62. A coated substrate according to paragraph 61, wherein the substrate is a paper product.

Paragraph 63. A coated paper product according to paragraph 62, wherein the paper product further comprises a precoat.

Paragraph 64. A coated paper product according to paragraph 63, wherein the precoat is applied as an aqueous composition comprising calcium carbonate.

Paragraph 65. A coated paper product according to paragraph 62, wherein the paper product is not precoated.

Paragraph 66. A coated paper product according to any one of paragraphs 62 to 65, wherein the paper product is inkjet printer paper.

Paragraph 67. A coated paper product according to any one of paragraphs 62 to 66, wherein the Cobb value, as measured in accordance with Tappi Test method T441, of the paper product is greater than about 20gsm or is greater than about 40gsm or greater than about 60gsm.

Paragraph 68. A coated paper product according to any one of paragraphs 62 to 67, wherein the basis weight of the paper product prior to coating is about 20g/m$^2$ to about 500g/m$^2$.

Paragraph 69. A coated paper product according to any one of paragraphs 62 to 68, wherein the paper product is double coated.

Paragraph 70. A coated paper product according to any one of paragraphs 62 to 69, wherein the paper product is calendered or supercalendered.

Paragraph 71. A coated paper product according to any one of paragraphs 62 to 70, wherein the amount of dried multivalent metal salt in the dried paper is about 0.01wt% to about 0.4wt%, for example about 0.02wt% to about 0.3wt%, for example about 0.05wt% to about 0.2wt%, based on the total weight of the final dried substrate or dried paper or the amount of dried multivalent metal salt in the dried paper is up to about 8wt% based on the total weight of the final dried substrate or dried paper.

Paragraph 72. A coated paper product according to any one of paragraphs 62 to 70, wherein the concentration of dried multivalent metal salt in the dried paper is about 0.01gsm to about 1gsm, for example about 0.02gsm to about 0.3gsm, for example about 0.03gsm to about 0.2gsm or wherein the concentration of dried multivalent metal salt in the dried paper is up to about 2.5gsm.

Paragraph 73. A method of making a coated paper product comprising applying the coating composition according to any one of paragraphs 49 to 57 to a paper product.

Paragraph 74. A method according to paragraph 73, wherein prior to applying the coating composition, a precoat is applied to the paper product.

Paragraph 75. A method according to paragraph 63 or 74, wherein two coats of the composition according to any one of paragraphs 49 to 57 are applied to the paper product.

**Claims**

1. A pigment composition comprising an inorganic particulate material, a multivalent metal salt and a non ionic dispersant, wherein the inorganic particulate material is selected from one or more of: alkaline earth metal carbonate or alkaline earth metal sulphate, dolomite, gypsum, a hydrous kandite clay, an anhydrous (calcined) kandite clay, talc or mica and wherein the non ionic dispersant is a polymer.

2. A pigment composition according to claim 1, wherein the alkaline earth metal carbonate is selected from one or more of calcium carbonate and magnesium carbonate.

3. A pigment composition according to claim 1 or 2 wherein the hydrous kandite clay is selected from kaolin, ball clay.

4. A pigment composition according to any one of claims 1 to 3, wherein the anhydrous (calcined) kandite clay is selected from metakaolin, fully calcined kaolin.

**5.** A pigment composition according to any one of claims 1 to 4, wherein the inorganic particulate material has a $d_{50}$ of about 0.1μm to about 2μm, for example wherein the inorganic particulate material has a $d_{50}$ of about 0.3μm to about 1.5μm, for example wherein the inorganic particulate material has a $d_{50}$ of about 0.3μm to about 0.7μm.

**6.** A pigment composition according to any one of claims 1 to 5, wherein the inorganic particulate material has a particle size distribution steepness factor ($d_{30}/d_{70}$ x 100) of about 25 to about 70 for example wherein the steepness factor is about 45 to about 50 or about 50 to about 70.

**7.** A pigment composition according to any one of claims 1 to 6, wherein the multivalent metal salt is a divalent metal salt.

**8.** A pigment composition according to claim 7, wherein the divalent metal salt is an alkaline metal salt, for example wherein the alkaline metal salt is a calcium or magnesium or barium salt.

**9.** A pigment composition according to any one of claims 1 to 8, wherein the anion of the metal salt is selected from chloride, sulphate, nitrate or hydroxide.

**10.** A pigment composition according to any one of claims 1 to 9, wherein the non ionic dispersant is a polymer and comprises alkylene oxide monomers or the non ionic dispersant is a polymer and comprises an uncharged hydrophobic chain.

**11.** A pigment composition according to any one of claims 1 to 10, wherein the non ionic dispersant comprises amine and/or phosphate group or groups.

**12.** A pigment composition according to claim 10, wherein the non ionic dispersant comprises amine and/or phosphate group or groups.

**13.** A pigment composition according to any one of claims 1 to 12, further comprising an ionic dispersant.

**14.** A pigment composition according to any one of claims 1 to 13, wherein the amount of non ionic dispersant is at least about 0.3wt% to about 1.5wt% based on the dry weight of the inorganic particulate material.

**15.** An aqueous coating composition comprising a pigment composition according to any one of claims 1 to 14, water and at least one binder, wherein the binder may be selected from one or more of: latex, starch, starch derivatives, polyvinyl alcohol (PVOH), proteins.

**16.** A substrate coated with an aqueous coating composition as claimed in claim 15, wherein the substrate may be a paper product, and the paper product may further comprise a precoat.

**Patentansprüche**

**1.** Pigmentzusammensetzung, umfassend anorganische Teilchen, ein mehrwertiges Metallsalz und ein nichtionisches Dispergiermittel, wobei die anorganischen Teilchen aus einem oder mehreren der folgenden Komponenten zusammengesetzt sind: Erdalkalimetallcarbonat oder Erdalkalimetallsulfat, Dolomit, Gips, wasserhaltigem Kandit-Ton, einem wasserfreien (kalzinierten) Kandit-Ton, Talk oder Glimmer und wobei das nichtionische Dispergiermittel ein Polymer ist.

**2.** Pigmentzusammensetzung gemäß Anspruch 1, wobei das Erdalkalimetallcarbonat aus Calciumcarbonat und/oder Magnesiumcarbonat zusammengesetzt ist.

**3.** Pigmentzusammensetzung gemäß Anspruch 1 oder 2, wobei es sich bei dem wasserhaltigen Kandit-Ton um Kaolin und/oder Töpferton handelt.

**4.** Pigmentzusammensetzung gemäß einem der Ansprüche 1 bis 3, wobei es sich bei dem wasserfreien (kalzinierten) Kandit-Ton um Metakaolin und/oder vollständig kalziniertes Kaolin handelt.

**5.** Pigmentzusammensetzung gemäß einem der Ansprüche 1 bis 4, wobei die anorganischen Teilchen ein $d_{50}$ von etwa 0,1 μm bis etwa 2 μm aufweisen, wobei beispielsweise die anorganischen Teilchen ein $d_{50}$ von etwa 0,3 μm

bis etwa 1,5 $\mu$m aufweisen oder wobei die anorganischen Teilchen ein $d_{50}$ von etwa 0,3 $\mu$m bis etwa 0,7 $\mu$m aufweisen.

6. Pigmentzusammensetzung gemäß einem der Ansprüche 1 bis 5, wobei die anorganischen Teilchen einen Steilheitsfaktor der Partikelgrößenverteilung ($d_{30}/d_{70}$ x 100) von etwa 25 bis etwa 70 aufweisen, wobei der Steilheitsfaktor etwa 45 bis etwa 50 oder etwa 50 bis etwa 70 beträgt.

7. Pigmentzusammensetzung gemäß einem der Ansprüche 1 bis 6, wobei es sich bei dem mehrwertigen Metallsalz um ein zweiwertiges Metallsalz handelt.

8. Pigmentzusammensetzung gemäß Anspruch 7, wobei das zweiwertige Metallsalz ein Alkalimetallsalz ist, wobei das Alkalimetallsalz beispielsweise ein Calcium- oder Magnesium- oder Bariumsalz ist.

9. Pigmentzusammensetzung gemäß einem der Ansprüche 1 bis 8, wobei es sich bei dem Anion des Metallsalzes um ein Chlorid, Sulfat, Nitrat und/oder Hydroxid handelt.

10. Pigmentzusammensetzung gemäß einem der Ansprüche 1 bis 9, wobei das nichtionische Dispergiermittel ein Polymer ist und Alkylenoxidmonomere umfasst oder das nichtionische Dispergiermittel ein Polymer ist und eine ungeladene hydrophobe Kette aufweist.

11. Pigmentzusammensetzung gemäß einem der Ansprüche 1 bis 10, wobei das nichtionische Dispergiermittel eine Amin- und/oder Phosphatgruppe oder - gruppen umfasst.

12. Pigmentzusammensetzung gemäß Anspruch 10, wobei das nichtionische Dispergiermittel eine Amin- und/oder Phosphatgruppe oder -gruppen umfasst.

13. Pigmentzusammensetzung gemäß einem der Ansprüche 1 bis 12, weiterhin umfassend ein ionisches Dispergiermittel.

14. Pigmentzusammensetzung gemäß einem der Ansprüche 1 bis 13, wobei die Menge an nichtionischem Dispergiermittel, bezogen auf das Trockengewicht der anorganischen Teilchen, mindestens etwa 0,3 Gewichtsprozent bis etwa 1,5 Gewichtsprozent beträgt.

15. Wässrige Lackzusammensetzung, umfassend eine Pigmentzusammensetzung gemäß einem der Ansprüche 1 bis 14, Wasser und mindestens ein Bindemittel, wobei das Bindemittel aus Latex, Stärke, Stärkederivaten, Polyvinylalkohol (PVOH) und/oder Proteinen zusammengesetzt sein kann.

16. Ein mit der wässrigen Beschichtungszusammensetzung gemäß Anspruch 15 beschichtetes Untergrundmaterial, wobei das Untergrundmaterial ein Papierprodukt sein kann und das Papierprodukt ferner eine Vorbeschichtung aufweisen kann.


**Revendications**

1. Une composition de pigment comprenant une matière particulaire inorganique, un sel métallique multivalent et un dispersant non ionique, dans laquelle la matière particulaire inorganique est choisie parmi un ou plusieurs de : carbonate de métal alcalino-terreux ou sulfate de métal alcalino-terreux, dolomite, gypse, une argile kandite hydrique, une argile kandite anhydre (calcinée), talc ou mica et dans laquelle le dispersant non ionique est un polymère.

2. Une composition de pigment selon la revendication 1, dans laquelle le carbonate de métal alcalino-terreux est choisi parmi un ou plusieurs carbonates de calcium et carbonates de magnésium.

3. Une composition de pigment selon la revendication 1 ou 2, dans laquelle l'argile de kandite hydrique est choisie parmi le kaolin, l'argile plastique.

4. Une composition de pigment selon l'une quelconque des revendications 1 à 3, dans laquelle l'argile kandite anhydre (calcinée) est choisie parmi le métakaolin, le kaolin entièrement calciné.

5. Une composition de pigment selon l'une quelconque des revendications 1 à 4, dans laquelle la matière particulaire inorganique a une densité $d_{50}$ d'environ 0,1 $\mu$m à environ 2 $\mu$m, par exemple, dans laquelle la matière particulaire inorganique a une densité $d_{50}$ d'environ 0,3 $\mu$m à environ 1,5 $\mu$m, par exemple dans laquelle la matière particulaire inorganique a une densité $d_{50}$ d'environ 0,3 $\mu$m à environ 0,7 $\mu$m.

6. Une composition de pigment selon l'une quelconque des revendications 1 à 5, dans laquelle la matière particulaire inorganique a un facteur de pente de distribution de la granulométrie ($d_{30}$/ $d_{70}$ x 100) d'environ 25 à environ 70, par exemple, dans laquelle le facteur de pente est d'environ 45 à environ 50 ou d'environ 50 à environ 70.

7. Une composition de pigment selon l'une quelconque des revendications 1 à 6, dans laquelle le sel métallique multivalent est un sel métallique divalent.

8. Une composition de pigment selon la revendication 7, dans laquelle le sel métallique divalent est un sel de métal alcalin, par exemple dans laquelle le sel de métal alcalin est un sel de calcium ou un sel de magnésium ou un sel de baryum.

9. Une composition de pigment selon l'une quelconque des revendications 1 à 8, dans laquelle l'anion du sel métallique est choisi parmi un chlorure, un sulfate, un nitrate ou un hydroxyde.

10. Une composition de pigment selon l'une quelconque des revendications 1 à 9, dans laquelle le dispersant non ionique est un polymère et comprend des monomères d'oxyde d'alkylène ou le dispersant non ionique est un polymère et comprend une chaîne hydrophobe non chargée.

11. Une composition de pigment selon l'une quelconque des revendications 1 à 10, dans laquelle le dispersant non ionique comprend un ou des groupes amines et / ou phosphates.

12. Une composition de pigment selon la revendication 10, dans laquelle le dispersant non ionique comprend un ou des groupes amines et / ou phosphates.

13. Une composition de pigment selon l'une quelconque des revendications 1 à 12, comprenant en outre un dispersant ionique.

14. Une composition de pigment selon l'une quelconque des revendications 1 à 13, dans laquelle la quantité de dispersant non ionique est d'au moins environ 0,3 % en poids à environ 1,5 % en poids sur la base du poids sec de la matière particulaire inorganique.

15. Une composition de revêtement aqueuse comprenant une composition de pigment selon l'une quelconque des revendications 1 à 14, de l'eau et au moins un liant, dans laquelle le liant peut être choisi parmi un ou plusieurs parmi : latex, amidon, dérivés d'amidon, alcool polyvinylique (PVOH), protéines.

16. Un substrat revêtu d'une composition de revêtement aqueuse selon la revendication 15, dans lequel le substrat peut être un produit en papier, et le produit en papier peut en outre comprendre un revêtement préalable.

Figure 1

Figure 2

Figure 3

Figure 4

Figure 5

Figure 6

Figure 7

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010107509 A1
- WO 2008112419 A2
- US 2007100035 A1
- DE 102004054048

- US 2004134378 A1
- EP 614948 A
- US 5576617 A

**Non-patent literature cited in the description**

- Paper Coating Pigments. *TAPPI Monograph,* 34-35

- *Pulp and Paper International,* May 1994, 18